# FASCICULE DE BREVET EUROPEEN

(11) **EP 0 988 094 B1**
(45) Date de publication et mention de la délivrance du brevet: **31.10.2001**
(21) Numéro de dépôt: 98929528.2
(22) Date de dépôt: 10.06.1998
(51) Int. Cl.: A62D 3/00

(54) **PROCEDE POUR TRAITER LES RESIDUS D'EPURATION DES FUMEES D'INCINERATION D'ORDURES MENAGERES ET/OU DE DECHETS INDUSTRIELS**
VERFAHREN ZUR BEHANDLUNG VON RÜCKSTÄNDEN DER REINIGUNG VON MÜLLVERBRENNUNGSABGASEN UND INDUSTRIELLEN ABFÄLLEN
METHOD FOR TREATING RESIDUES RESULTING FROM THE PURIFICATION OF GARBAGE AND/OR INDUSTRIAL WASTE INCINERATION FUMES

(30) Priorité: 11.06.1997 FR 9707219
(43) Date de publication de la demande: 29.03.2000
(73) Titulaire: B et C Services, S.A.R.L., 38000 Grenoble (FR); R V X, Société Anonyme, 74250 Viuz en Sallaz (FR)
(72) Inventeur: DAVILLER, Daniel, F-38320 Poisat (FR); RIZET, Laurent, F-74250 Viuz en Sallaz (FR)
(74) Mandataire: Hammond, William
(86) Numéro de dépôt international: FR9801179
(87) Numéro de publication internationale: WO9856464

(56) Documents cités:
- EP-A- 0 538 598
- DATABASE WPI Section Ch, Week 7918 Derwent Publications Ltd., London, GB; Class D15, AN 79-34047B XP002056999 & JP 54 037365 A (MITSUBISHI HEAVY IND CO LTD), 19 mars 1979
- DATABASE WPI Section Ch, Week 8342 Derwent Publications Ltd., London, GB; Class D15, AN 83-790929 XP002057030 & JP 58 089988 A (MITSUBISHI HEAVY IND CO LTD), 28 mai 1983
- PATENT ABSTRACTS OF JAPAN vol. 006, no. 114 (C-110), 25 juin 1982 & JP 57 042388 A (NIPPON KOKAN KK), 9 mars 1982
- DATABASE WPI Section Ch, Week 7607 Derwent Publications Ltd., London, GB; Class D15, AN 76-11773X XP002057031 & JP 50 021565 A (HITACHI SHIP & ENG CO LTD), 7 mars 1975

## Description

La présente invention est relative à un procédé pour traiter les résidus d'épuration des fumées d'incinération d'ordures ménagères et/ou de déchets industriels.

Les usines d'incinération génèrent à partir des ordures ménagères des mâchefers, d'une part, et des fumées chargées de poussières et contenant des gaz nocifs, d'autre part. La dépollution des fumées est généralement réalisée grâce à de la chaux : ainsi, les gaz chlorhydrique et sulfureux sont captés et transformés en chlorure et sulfate de chaux, tandis que les métaux lourds présents dans les fumées sont adsorbés à la surface des particules de chaux. L'ensemble des produits obtenus après un tel traitement à la chaux et en sortie de filtre constituent des résidus actuellement mis en décharge, ou en des lieux de stockage conformes aux réglementations nationales, européennes ou internationales.

Ces résidus comprennent donc des produits issus de la réaction avec la chaux, des métaux lourds amphotères adsorbés, du carbonate de calcium, de la chaux et des produits provenant de l'incinération et captés par le traitement à la chaux sous forme de poussières inertes (silice et alumine par exemple).

La composition de ces résidus en ces différents constituants est évidemment fonction de la nature des ordures et déchets incinérés, ainsi que du type de traitement des fumées mis en oeuvre.

En ce qui concerne la pollution, on distingue dans ces résidus trois catégories :
- les espèces exemptes de produits polluants ;
- les espèces renfermant des produits nocifs ou polluant mais sous forme stable : il n'y a aucun risque pour le milieu externe ; et
- les espèces contenant des éléments nocifs disponibles pour le milieu extérieur : elles représentent environ 2 % en poids des résidus.

Ainsi que l'homme du métier l'aura compris, c'est cette dernière catégorie qui est une source potentielle de pollution : elle comprend notamment des métaux lourds accessibles et donc susceptibles de contaminer le milieu extérieur, et est la cause des réglementations actuelles imposant une mise en stockage en des lieux appropriés. JP-A-58089988 decrit le traitement de tels résidus avec des solutions fortement basiques.

Ainsi, un des buts de la présente invention est-il de fournir un procédé pour traiter les résidus d'épuration des fumées d'incinération d'ordures ménagères et/ou de déchets industriels qui permet d'extraire les métaux lourds et de recycler au maximum les réactifs.

Un autre but de l'invention est de fournir un tel procédé qui permet aussi de séparer les différents éléments présents dans les résidus afin de les valoriser au mieux, les recycler ou les éliminer dans le respect des réglementations en vigueur.

Un but supplémentaire est de fournir un procédé de ce type qui permet d'utiliser du gaz carbonique tel que celui émis, par exemple, par des usines d'incinération.

Un autre but de la présente invention est de fournir un tel procédé qui permet de valoriser au mieux les produits obtenus pour un coût minimum.

Ces buts, ainsi que d'autres qui apparaîtront par la suite, sont atteints par un procédé pour traiter les résidus d'épuration des fumées d'incinération d'ordures ménagères et/ou de déchets industriels, qui est, selon la présente invention, caractérisé par le fait qu'il comprend les étapes suivantes :
A - on dessale les résidus par un lavage au carbonate de sodium en quantité suffisante ou légèrement en excès pour solubiliser tous les sels y compris les sulfates et précipiter le calcium soluble, le pH étant supérieur à 11, puis on effectue une séparation solide/liquide pour obtenir un gâteau dessalé ;
B - on lixivie ce gâteau issu de l'étape A par du carbonate de sodium en quantité nécessaire ou légèrement en excès pour obtenir par réaction avec la chaux présente dans ce gâteau ou ajoutée si besoin est, l'alcalinité nécessaire à la solubilisation des métaux amphotères, le pH étant d'environ 14, obtenant par une séparation solide/liquide un gâteau et un surnageant qui est neutralisé avec du gaz carbonique et on filtre la solution récupérée pour obtenir, d'une part, des boues d'hydroxydes métalliques et, d'autre part, une solution aqueuse de carbonate de sodium que l'on peut recycler vers l'étape B elle-même et,
C - on neutralise les résidus issus de l'étape B, à un pH compris entre 6,5 et 8,5.

Avantageusement, avant l'étape A, on réalise une étape D de prélavage à l'eau des résidus pour éliminer les sels de calcium solubles, tel que le chlorure de calcium en particulier.

De préférence, la solution issue de l'étape A est neutralisée par insufflation de gaz carbonique et on recueille par séparation liquide/solide des boues d'hydroxydes métalliques et une solution neutralisée.

On fait de même avec la solution de l'étape D. Les solutions neutralisées sont mélangées et filtrées pour obtenir un surnageant constitué par une saumure de chlorure de calcium et de sodium et un précipité de sulfate de calcium ou gypse.

Avantageusement, entre les étapes B et C, on réalise une étape E de lavage du gâteau de filtration issu de l'étape B afin d'éliminer le maximum de soude et de métaux restant dans le liquide interstitiel. La solution de lavage est de préférence traitée par injection de gaz carbonique jusqu'à un pH voisin de 11. La solution du carbonate de sodium est avantageusement recyclée vers l'étape A.

Quant à l'étape C de neutralisation des résidus issus de l'étape B ou E, elle est réalisée par injection de gaz carbonique pour précipiter les carbonates de calcium afin d'obtenir des résidus épurés.

La description qui va suivre et qui ne présente aucun caractère limitatif doit être lue en regard des figures annexées parmi lesquelles :
- la figure 1 est un diagramme schématique de la succession des étapes principales constituant un procédé pour traiter des résidus d'épuration des fumées d'incinération d'ordure ménagère et de déchets industriels selon la présente invention ; et,
- la figure 2 est un diagramme schématique représentant la succession d'étapes d'un mode de réalisation avantageux de ce même procédé.

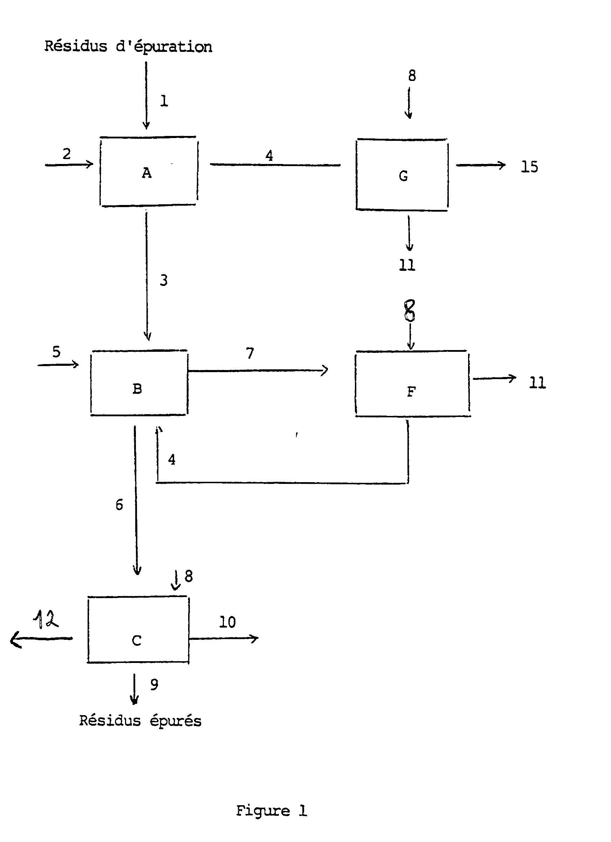

Ainsi qu'on peut le voir sur la figure 1, un procédé pour traiter des résidus d'épuration de fumées d'incinération d'ordures ménagères et de déchets industriels comprend selon la présente invention au moins trois étapes.

Dans une première étape ou étape A, les résidus d'épuration 1 sont dessalés par un lavage au carbonate de sodium 2. La quantité de carbonate de sodium utilisée est celle au moins nécessaire pour solubiliser tous les sels y compris les sulfates, c'est-à-dire au minimum la quantité stoechiométrique permettant la précipitation du calcium soluble ; le pH est par conséquent supérieur à 11 et de préférence à 12. Puis, on effectue une séparation solide/liquide, telle qu'une filtration, pour obtenir, d'une part, un gâteau dessalé 3 et, d'autre part, une solution riche en sels 4.

La solution riche en sels 4, issue de l'étape A, est neutralisée par insufflation de gaz carbonique 8 (étape G) : le pH est compris entre 8,5 et 9,5 et de préférence entre 9 et 9,2. On recueille par séparation solide/liquide telle qu'une filtration d'une part des boues d'hydroxydes métalliques 11 et d'autre part une solution neutralisée 15.

Le gâteau dessalé 3 issu de l'étape A est dans une deuxième étape ou étape B lixivié par du carbonate de sodium en quantité nécessaire ou légèrement en excès pour obtenir l'alcalinité nécessaire à la solubilisation des métaux amphotères tels que le cadmium (Cd), le plomb (PB et le zinc (Zn), c'est-à-dire un pH au moins supérieur à 12, voire même d'environ 14. L'alcalinité est obtenue par réaction du carbonate de sodium avec la chaux présente dans les résidus et/ou ajoutée en 5 si besoin est. Puis, on effectue une séparation solide/liquide pour obtenir, d'une part, un gâteau de résidus décontaminés 6 et, d'autre part, un sumageant 7 comprenant les métaux amphotères.

Ce surnageant 7 est neutralisé (étape F) avec du gaz carbonique 8, le pH étant compris entre 11 et 11,5 et de préférence égal à 11, et on filtre la solution récupérée pour obtenir, d'une part, des boues d'hydroxydes métalliques 11 et, d'autre part, une solution aqueuse de carbonate de sodium 4 que l'on peut recycler vers l'étape B elle-même.

Le gâteau de résidus décontaminés 6 issu de l'étape B est dans une troisième étape, ou étape C, neutralisé par injection de gaz carbonique 8 afin de précipiter la chaux résiduelle éventuelle sous forme de carbonate de calcium 10, le pH étant compris entre 6,5 et 8,5 et de préférence égal à 7,5 ; puis on effectue une séparation solide/liquide telle qu'une filtration pour obtenir, d'une part, des résidus épurés 9 et, d'autre part, une solution d'hydrogéno-carbonate de sodium 12.

Les résidus épurés 9 recueillis à l'issu de l'étape C peuvent être utilisés en remblai ou introduits dans un four d'incinération pour être transformés en mâchefers : ils sont donc valorisables.

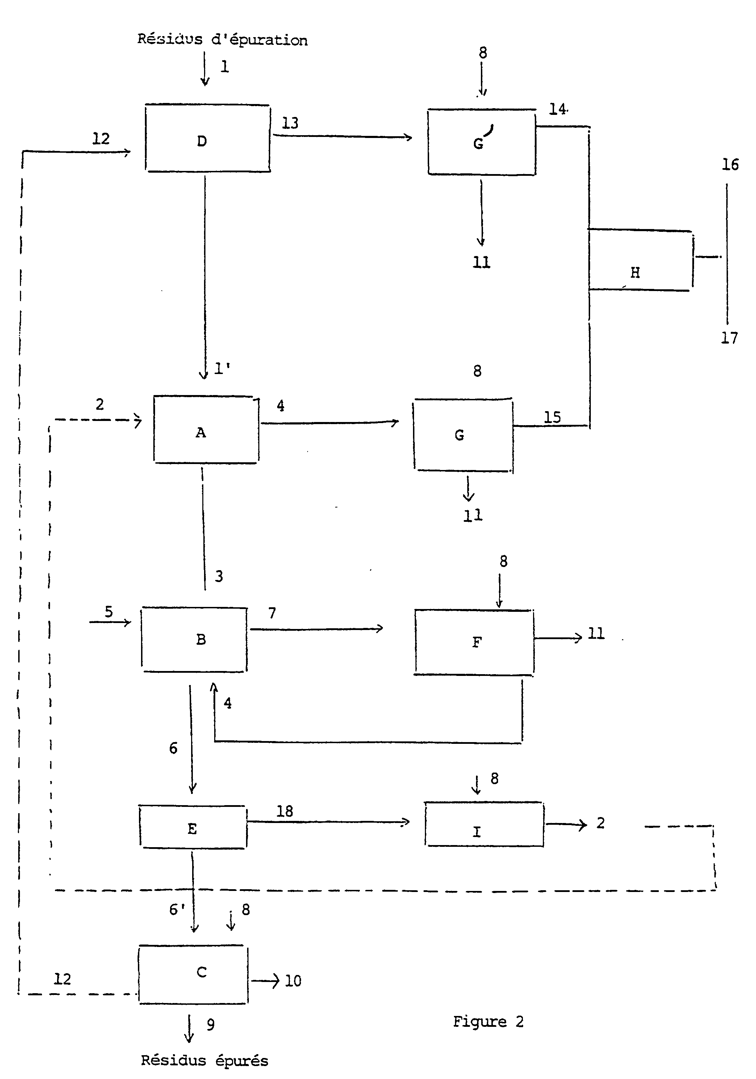

Selon le mode de réalisation avantageux du procédé représenté sur la figure 2, celui-ci comprend des étapes supplémentaires par rapport à celui décrit précédemment en référence à la figure 1.

Ainsi, il peut être avantageux avant l'étape A de soumettre les résidus d'épuration des fumées d'incinération à un lavage à l'eau (étape D) éventuellement additionné de carbonate de sodium telle que la solution 12 obtenue à l'issue de l'étape C. Par séparation liquide/solide on obtient, d'une part, un gâteau de résidus déchlorurés 1' et, d'autre part, une solution de chlorures 13. On neutralise, dans une étape G', cette solution par injection de gaz carbonique 8, le pH étant compris entre 8,5 et 9,5 et de préférence entre 9 et 9,2, et on recueille par séparation liquide/solide telle qu'une filtration, d'une part, des boues d'hydroxydes métalliques 11 et, d'autre part, une solution neutralisée 14.

Cette solution neutralisée 14 issue de l'étape G' est mélangée à celle 15 issue de l'étape G ; puis on effectue une séparation liquide/solide telle qu'une filtration pour obtenir un surnageant 16 constitué par une saumure de chlorure de calcium et de sodium, et un précipité de sulfate de calcium ou gypse 17.

Le gâteau de résidus décontaminés 6 issu de l'étape B peut être soumis dans une étape E à un lavage sur filtre à l'eau afin d'éliminer le maximum de soude et d'éventuels métaux restant dans le liquide interstitiel. La solution de lavage 18 est par la suite traitée par injection de gaz carbonique 8 jusqu'à obtenir un pH voisin de 11 (étape I). La solution ainsi neutralisée 2 comprenant donc du carbonate de sodium et des métaux est recyclée vers l'étape A. Le gâteau de résidus décontaminés lavé 6' est ensuite épuré à l'étape C.

Dans le tableau ci-après sont indiquées les compositions de résidus épurés obtenues à partir de différents résidus d'incinération soumis au procédé selon la présente invention et ayant différentes compositions.

**TABLEAU**

| **Résidus d'épuration** | | **Compositions % en poids** | | | | | | |
|---|---|---|---|---|---|---|---|---|
| | | Na | K | Ca | Cl | SO₄ | Pb | Zn |
| Sec | avant | 3 | 4,6 | 36 | 22,4 | 1,5 | 0,04 | 0,27 |
| | après | 0 | 0 | 53,75 | 0 | 0 | 0,007 | 0,088 |
| Semi-humide | avant | 0,8 | 1,6 | 16,8 | 5 | 4,4 | 0,17 | 0,57 |
| | après | 0 | 0 | 19,46 | 0 | 0 | 0,05 | 0,22 |
| Humide | avant | 0 | 0 | 10,8 | 0,64 | 4,95 | 0,4 | 1,26 |
| | après | 0 | 0 | 18,33 | 0 | 0 | 0,12 | 0,34 |

On notera que dans les résidus traités, la proportion en métaux lourds est inférieure aux tolérances actuelles.

## Revendications

1. Procédé pour traiter les résidus d'épuration des fumées d'incinération d'ordures ménagères et/ou de déchets industriels, **caractérisé par le fait qu'**il comprend les étapes suivantes :
A - on dessale les résidus (1,1') par un lavage au carbonate de sodium (2) en quantité suffisante ou légèrement en excès pour solubiliser tous les sels y compris les sulfates et précipiter le calcium soluble, le pH étant supérieur à 11, puis on effectue une séparation solide/liquide pour obtenir un gâteau dessalé (3) ;
B - on lixivie ce gâteau (3) issu de l'étape A par du carbonate de sodium en quantité nécessaire ou légèrement en excès pour obtenir par réaction avec la chaux présente dans ce gâteau ou ajoutée si besoin est, l'alcalinité nécessaire à la solubilisation des métaux amphotères, le pH étant supérieur à 12, obtenant par une séparation solide/liquide un gâteau (6) et un surnageant (7) qui est neutralisé avec du gaz carbonique (8) et on filtre la solution récupérée pour obtenir, d'une part, des boues d'hydroxydes métalliques (11) et, d'autre part, une solution aqueuse de carbonate de sodium (4) que l'on peut recycler vers l'étape B elle-même et, (4)
C - on neutralise à un pH compris entre 6,5 et 8,5 les résidus (6, 6') issus de l'étape B.

2. Procédé selon la revendication 1, **caractérisé par le fait qu'**avant l'étape A, on réalise une étape D de prélavage à l'eau des résidus pour éliminer les sels de calcium solubles, tel que le chlorure de calcium en particulier.

3. Procédé selon la revendication 1, **caractérisé par le fait que** la solution issue de l'étape A est neutralisée par insufflation de gaz carbonique (8) et qu'on recueille par séparation liquide/solide des boues d'hydroxydes métalliques (11) et une solution neutralisée (15).

4. Procédé selon la revendication 2, **caractérisé par le fait que** la solution issue de l'étape D est neutralisée par insufflation de gaz carbonique (8) et qu'on recueille par séparation liquide/solide des boues et d'hydroxydes métalliques (11) et une solution neutralisée (14).

5. Procédé selon la revendication 3, **caractérisé par le fait que** les solutions neutralisées (14, 15) sont mélangées et filtrées pour obtenir un surnageant constitué par une saumure de chlorure de calcium et de sodium (16) et un précipité de sulfate de calcium ou gypse (17).

6. Procédé selon la revendication 1, **caractérisé par le fait qu'**entre les étapes B et C, on réalise une étape E de lavage du gâteau (6) de filtration issu de l'étape B afin d'éliminer le maximum de soude et de métaux restant dans le liquide interstitiel et on recueille la solution de lavage (18).

7. Procédé selon la revendication 6, **caractérisé par le fait que** les solutions neutralisées sont traitées par injection de gaz carbonique jusqu'à un pH voisin de 11, afin d'obtenir une solution de carbonate de sodium.

8. Procédé selon la revendication 7, **caractérisé par le fait que** la solution carbonate de sodium est recyclée vers l'étape A.

9. Procédé selon l'une des revendications 1 à 6, **caractérisé par le fait que** les résidus (6, 6') issus des étapes B ou E sont neutralisés par injection de gaz carbonique (8) pour précipiter les carbonates de calcium (10) afin d'obtenir des résidus épurés (9).

## Patentansprüche

1. Verfahren zur Behandlung von Rückständen der Reinigung von Rauchgasen, die bei der Verbrennung von Hausmüll und/oder Industriemüll anfallen, **dadurch gekennzeichnet, dass** das Verfahren die folgenden Stufen umfasst:
A) Entsalzung der Rückstände (1, 1') durch einen Waschvorgang mit Natriumcarbonat (2) in einer ausreichenden Menge oder im leichten Überschuß, um sämtliche Salze, darunter die Sulfate, in Lösung zu bringen und lösliches Calcium auszufällen, wobei der pH-Wert über 11 liegt, und anschließende Durchführung einer Feststoff/Flüssigkeits-Trennung unter Erhalt eines entsalzten Kuchens (3);
B) Auslaugung des in Stufe A erhaltenen Kuchens (3) mit Natriumcarbonat in der erforderlichen Menge oder in einem leichten Überschuß, um durch Umsetzung mit dem im Kuchen vorhandenen oder gegebenenfalls zugesetzten Kalk die zur Lösung der amphoteren Metalle erforderliche Alkalinität zu erreichen, wobei der pH-Wert über 12 liegt, durch Feststoff/Flüssigkeits-Trennung Bildung eines Kuchens (6) und eines Überstands (7), der mit gasförmigem Kohlendioxid (8) neutralisiert wird, und Filtration der erhaltenen Lösung unter Bildung von Metallhydroxidschlamm (11) einerseits und einer wässrigen Natriumcarbonatlösung (4) (die in die Stufe B zurückgeführt werden kann) andererseits und
C) Neutralisation der in Stufe B erhaltenen Rückstände (6, 6') auf einen pH-Wert von 6,5 bis 8,5.

2. Verfahren nach Anspruch 1, **dadurch gekennzeichnet, dass** man vor der Stufe A eine Stufe D durchführt, bei der ein Vorwaschgang der Rückstände mit Wasser durchgeführt wird, um lösliche Calciumsalze, insbesondere Calciumchlorid, zu entfernen.

3. Verfahren nach Anspruch 1, **dadurch gekennzeichnet, dass** die in Stufe A erhaltene Lösung durch Einleiten von Kohlendioxidgas (8) neutralisiert wird und man durch Flüssigkeits/Feststoff-Trennung einen Metallhydroxidschlamm (11) und eine neutralisierte Lösung (15) erhält.

4. Verfahren nach Anspruch 2, **dadurch gekennzeichnet, dass** die in der Stufe D erhaltene Lösung durch Einleiten von Kohlendioxidgas (8) neutralisiert wird und man durch Flüssigkeits/Feststoff-Trennung Metallhydroxidschlamm (11) und eine neutralisierte Lösung (14) erhält.

5. Verfahren nach Anspruch 3, **dadurch gekennzeichnet, dass** die neutralisierten Lösungen (14, 15) vermischt und filtriert werden, wodurch man einen Überstand, der aus einer Salzlösung (16) von Calciumchlorid und Natriumchlorid besteht, und einen Niederschlag (17) aus Calciumsulfat oder Gips erhält.

6. Verfahren nach Anspruch 1, **dadurch gekennzeichnet, dass** man zwischen den Stufen B und C eine Stufe E durchführt, bei der der in Stufe B erhaltene Filterkuchen (6) gewaschen wird, um Natriumcarbonat und Metalle, die in der interstitiellen Flüssigkeit verbleiben, möglichst weitgehend zu beseitigen, wobei man die Waschlösung (18) gewinnt.

7. Verfahren nach Anspruch 6, **dadurch gekennzeichnet, dass** die neutralisierten Lösungen durch Einleiten von Kohlendioxidgas bis zu einem pH-Wert in der Nähe von 11 behandelt werden, wodurch man eine Natriumcarbonatlösung erhält.

8. Verfahren nach Anspruch 7, **dadurch gekennzeichnet, dass** die Natriumcarbonatlösung in die Stufe A zurückgeführt wird.

9. Verfahren nach einem der Ansprüche 1 bis 6, **dadurch gekennzeichnet, dass** die in den Stufen B oder E erhaltenen Rückstände (6, 6') durch Einleiten von Kohlendioxidgas (8) neutralisiert werden, um Calciumcarbonat (10) auszufällen, wodurch man einen gereinigten Rückstand (9) erhält.

## Claims

1. A method of processing the residues after purification of the fumes from incineration of household waste and/or industrial waste, **characterised in that** it comprises the following steps:
A - the residues (1.1) are desalted by washing with sodium carbonate (2) in sufficient quantity or slightly in excess for solubilising all the salts including sulphates and precipitating the soluble calcium, the pH being above 11, after which the solids are separated from liquid to obtain a desalted cake(3);
B - the cake (3) from step A is leached with sodium carbonate in the necessary quantity or slightly in excess for reacting with the lime present in the cake or added if required to the obtain the alcalinity necessary for solubilising amphoteric metals, the pH being above 12, the solids are separated from the liquid to obtain a cake (6) and a supernatant (7) which is neutralised with carbon dioxide (8) and the recovered solution is filtered to obtain on the one hand metal hydroxide sludges (11) and on the other hand an aqueous solution of sodium carbonate (4) which can be recycled to the said step B and
C - the residues (6, 6') from step B are neutralised at a pH between 6.5 and 8.5

2. A method according to claim 1, **characterised in that** step A is preceded by a step D of preliminary washing the residues with water to eliminate the soluble calcium salts, such as calcium chloride in particular.

3. A method according to claim 1, **characterised in that** the solution from step A is neutralised by blowing in carbon dioxide (8) and the liquid is separated from the solids to obtain metal hydroxide sludges (11) and a neutralised solution(15)

4. A method according to claim 2, **characterised in that** the solution from step D is neutralised by blowing in carbon dioxide (8) and the liquid is separated from the solids to obtain sludges and metal hydroxides (11) and a neutralised solution (14).

5. A method according to claim 3, **characterised in that** the neutralised solutions (14, 15) are mixed and filtered to obtain a supernatant consisting of calcium and sodium chloride brine (16) and calcium sulphate or gypsum (17) is precipitated.

6. A method according to claim 1, **characterised in that** a step E is inserted between steps B and C for washing the filter cake (6) from step B for maximum elimination of residual sodium and metals in the interstitial liquid and the washing solution (18) is collected.

7. A method according to claim 6, **characterised in that** the neutralised solutions are treated by injecting carbon dioxide until the pH is near 11, in order to obtain a solution of sodium carbonate.

8. A method according to claim 7, **characterised in that** the sodium carbonate solution is recycled to step A.

9. A method according to any of claims 1 to 6, **characterised in that** the residues (6,6') from step B or E are neutralised by injecting carbon dioxide (8) to precipitate the calcium carbonates (10) in order to obtain purified residues.
